# EUROPÄISCHE PATENTSCHRIFT

(11) **EP 0 395 574 B1**
(45) Veröffentlichungstag und Bekanntmachung des Hinweises auf die Patenterteilung: **28.07.1993**
(21) Anmeldenummer: 90810249.4
(22) Anmeldetag: 28.03.1990
(51) Int. Cl.: F16K 39/02

(54) **Druckmediumbetätigtes Ventil**
Pressure fluid actuated valve
Vanne commandée par un fluide sous pression

(30) Priorität: 27.04.1989 CH 1609/89
(43) Veröffentlichungstag der Anmeldung: 31.10.1990
(73) Patentinhaber: GEBRÜDER SULZER AKTIENGESELLSCHAFT, CH-8401 Winterthur (CH)
(72) Erfinder: Tiefenthaler, Edelbert, CH-8353 Elgg (CH)

(56) Entgegenhaltungen:
- DE-C- 834 630
- FR-A- 492 283
- FR-A- 904 652
- US-A- 2 698 730
- US-A- 2 897 836

## Beschreibung

Die Erfindung betrifft ein druckmediumbetätigtes Ventil mit den Merkmalen des Oberbegriffs des Anspruchs 1. Ein solches Ventil ist aus der US-A-2,897,836 bekannt.

Druckmediumbetätigte Ventile werden üblicherweise aufgrund der statischen Kräfte ausgelegt, d.h. für die Kräfte, die an dem in Ruhe befindlichen, aus Ventilteller, Servokolben und Spindel bestehenden beweglichen System wirken. Beim Oeffnen des Ventils ergeben sich jedoch verschiedene dynamische Kräfte am beweglichen System. So können Druckstösse entstehen, was daher rührt, dass der vom Eintrittsstutzen zum Austrittsstutzen hin sich ausbreitende Mediumdruck auch auf die Rückseite des Ventiltellers wirkt und dort die Oeffnungsbewegung beschleunigt. Dies kann zu unerwünschtem Schwingen des Ventiltellers führen und bei sehr hohen Druckunterschieden zu zusätzlichen mechanischen Belastungen im gesamten druckführenden System führen. Um diese Druckstösse auszugleichen, ist beim eingangs genannten bekannten Ventil der Ausgleichszylinder mit dem Ausgleichskolben vorgesehen. Ausser den hierdurch abgeschwächten Druckstössen können bei dem bekannten Ventil in seinem geöffneten Zustand weitere unerwünschte dynamische Kräfte wirken, z.B. durch Umlenkung der Strömung des Mediums am Ventilteller bedingte Impulskräfte. Schliesslich können am beweglichen System dynamische Kräfte wirken, die durch Zustandsänderung des im Ventil strömenden Mediums entstehen, wenn das Medium z.B. Dampf ist, der infolge Druckänderung plötzlich Wasser mitführt, das dann schlagartig auf den Ventilteller trifft. Diese weiteren dynamischen Kräfte bewirken ebenfalls zusätzliche mechanische Belastungen.

Der Erfindung liegt die Aufgabe zugrunde, bei einem Ventil der eingangs genannten Art auf einfache und kostengünstige Weise die Wirkung der weiteren, bei geöffnetem Ventil auftretenden dynamischen Kräfte zu verringern.

Diese Aufgabe wird erfindungsgemäss durch die Merkmale des Kennzeichens des Anspruchs 1 gelöst.

Durch den Strömungsleitkörper mit dem in ihn ragenden Fortsatz des Ventiltellers treten zuströmseitig am Ventilteller keine Strömungsumlenkungen mehr auf, so dass dadurch bedingte Impulskräfte eliminiert sind. Ausserdem wirken sich plötzlich auftretende Zustandsänderungen des Mediums, z.B. Wasserschläge, nicht mehr auf den Ventilteller aus, da diese vom fest im Gehäuse angeordneten Strömungsleitkörper aufgefangen werden. Die mechanischen Belastungen des Ventils werden also reduziert.

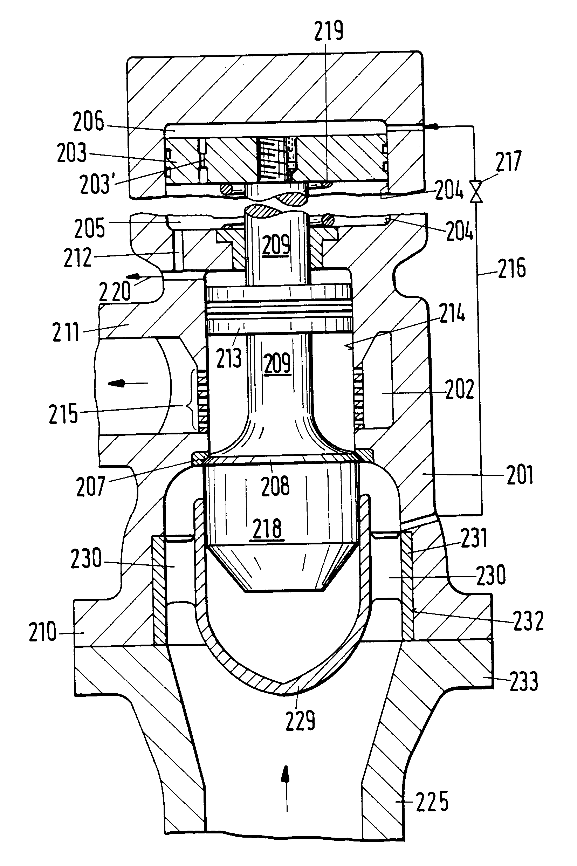

Ein Ausführungsbeispiel der Erfindung wird in der folgenden Beschreibung anhand der Zeichnung näher erläutert, die einen Längsschnitt durch ein Sicherheitsventil nach der Erfindung zeigt, das nach dem Belastungsprinzip betätigt wird.

Ein Gehäuse 201, das einen Ventilraum 202 einschliesst, ist mit einem von diesem Raum abgeschirmten, vertikalen Zylinder 204 versehen, der durch einen Servokolben 203 in einen unteren Zylinderraum 205 und einen oberen Zylinderraum 206 unterteilt ist. Im Ventilraum 202 ist ein mit einem Ventilsitz 207 zusammenwirkender Ventilteller 208 angeordnet, der über eine Spindel 209 mit dem koaxialen Servokolben 203 verbunden ist. Auf der dem Ventilteller 208 zugewandten Seite des Ventilsitzes 207 ist das Gehäuse 201 mit einem Eintrittsstutzen 210 verbunden, an dem eine nicht gezeigte Druckmittelquelle angeschlossen ist. Auf der vom Ventilteller 208 abgewandten Seite des Ventilsitzes 207 schliesst sich an den Ventilraum 202 ein Austrittsstutzen 211 an, der mit einer ebenfalls nicht gezeigten Druckmittelsenke verbunden ist.

In Strömungsrichtung hinter dem Ventilsitz 207 ist im Ventilraum 202 ein Ausgleichszylinder 214 vorgesehen, in dem ein mit der Spindel 209 verbundener koaxialer Ausgleichskolben 213 geführt ist. Die einander zugewandten Stirnflächen des Ventiltellers 208 und des Ausgleichskolbens 213 sind dabei ungefähr gleich gross. Der Ausgleichszylinder 214 weist zwischen dem Ausgleichskolben 213 und dem Ventilteller 208 einen durchbohrten Bereich 215 auf, über den er mit dem Austrittsstutzen 211 in Verbindung steht.

Der Eintrittsstutzen 210 und der obere Zylinderraum 206 sind über eine Leitung 216 verbunden, die ein Steuerventil 217 aufweist. Eine Drosselbohrung 203' im Servokolben 203 verbindet die beiden Räume 205 und 206. Eine Entlastungsleitung 220 verbindet das dem Ventilteller 208 abgewandte Ende des Ausgleichszylinders 214 mit einer Druckmittelsenke, die vorzugsweise die gleiche ist, mit der auch der Austrittsstutzen 211 verbunden ist. Der untere Zylinderraum 205 ist über einen Kanal 212 mit der Entlastungsleitung 220 und dadurch ebenfalls mit der Druckmittelsenke verbunden.

Eine Druckfeder 219 ist im Zylinderraum 205 angeordnet und unterstützt die Schliessbewegung des Ventiltellers 208, so dass bei Drucklosigkeit das Ventil geschlossen bleibt.

Auf der Zuströmseite des Ventiltellers 208 ist dieser mit einem zylindrischen Fortsatz 218 versehen, der etwa gleichen Durchmesser aufweist wie der grösste Durchmesser des Ventiltellers 208 und der an seinem in der Zeichnung unteren Ende in einen Kegelstumpf übergeht. Der zylindrische Fortsatz 218 ragt in einen Strömungsleitkörper 229, der in seinem oberen Teil als zylindrische Führung für den Fortsatz 218 und in seinem unteren Teil stromlinienförmig ausgebildet ist. Der Strömungsleitkörper 229 steht über mehrere radiale Rippen 230 mit einem Ring 231 in Verbindung. Der Innendurchmesser des Ringes 231 ist etwa gleich dem Durchmesser des Ventilgehäuses 201 im Eintrittsbereich des Mediums. Zum Aufnehmen des Ringes 231 ist im Eintrittsstutzen 210 eine dem Aussendurchmesser des Ringes 231 angepasste Ausdrehung 232 vorgesehen, die an ihrem oberen Ende in einer Schulter endet, an der die obere Stirnfläche des Ringes 231 anliegt. Die untere Stirnfläche des Ringes 231 stützt sich am Flansch 233 der am Eintrittsstutzen 210 angeschlossenen Leitung 225 ab.

Durch den Strömungsleitkörper 229 wird also das über die Leitung 225 zuströmende Medium in den Ringraum zwischen diesem Körper und dem Ventilgehäuse 201 abgelenkt, so dass durch diese Ablenkung hervorgerufene Impulskräfte vom feststehenden Strömungsleitkörper 229 aufgenommen werden. Bei geöffnetem Ventilteller 208 treten somit an diesem keine nennenswerten Umlenkungen und damit Impulskräfte auf. Die dem zuströmenden Medium ausgesetzte, stromlinienförmige Fläche des Strömungsleitkörpers 229 ist im wesentlichen frei von Oeffnungen oder Durchbrüchen; lediglich zum Herausdrücken von Medium aus dem Hohlraum beim Oeffnen des Ventiltellers 208 und zum Nachsaugen bei dessen Schliessbewegung kann eine kleine Bohrung im Körper 229 vorgesehen sein.

Die Zeichnung zeigt das Sicherheitsventil in seiner Normalbetriebsstellung, d.h. es ist geschlossen. In diesem Betriebszustand ist das Steuerventil 217 ebenfalls geschlossen. Im unteren Zylinderraum 205 sowie - wegen der Drosselbohrung 203 - im oberen Zylinderraum 206 und in dem über den Kanal 212 ebenfalls mit ihm komunizierenden, dem Ventilteller 208 abgewandten Ende des Ausgleichszylinders 214 herrscht somit der gleiche niedrige Druck wie in der Entlastungsleitung 220. Auch im Ausgleichszylinder 214 zwischen dem Ventilteller 208 und dem Ausgleichskolben 213 herrscht der gleiche niedrige Druck wie in dem Austrittsstutzen 211. Auf der dem Eintrittsstutzen 210 zugewandten Stirnfläche des Ventiltellers 208 wirkt dagegen der hohe Mediumdruck und drückt den Ventilteller 208 dichtend gegen den Ventilsitz 207. Ueber die Drosselbohrung 203' und den Kanal 212 kann im Zylinder 204 entstehendes Kondensat abgeführt werden.

Wird nun das Steuerventil 217 geöffnet, so erreicht der hohe Druck im Eintrittsstutzen 210 über die Leitung 216 den oberen Zylinderraum 206. Da die über die Drosselbohrung 203' entweichende Druckmittelmenge sehr gering ist, bleibt der geringere Druck im unteren Zylinderraum 205 zunächst erhalten. Dabei bleiben die Druckverhältnisse im übrigen Ventil unverändert. Da die den oberen Zylinderraum 206 begrenzende Stirnfläche des Servokolbens 203 grösser als die vom hohen Druck im Eintrittsstutzen 210 beaufschlagte Stirnfläche des Ventiltellers 208 ist, bewegen sich jetzt die Spindel 209 und alle damit verbundenen Teile abwärts, wobei das Ventil öffnet. Der nun auf der Rückseite des Ventiltellers 208 wirkende Druck wirkt zugleich auf die dem Teller zugewandte Stirnfläche des Ausgleichskolbens 213. Da diese beiden Stirnflächen ungefähr gleich gross sind, heben sich die daraus resultierenden Kräfte auf und die Lage des Ventiltellers 208 wird nicht nennenswert durch Druckstösse beeinflusst.

Beim Schliessen des Steuerventils 217 sinkt der Druck im oberen Zylinderraum 206, und die Differenz des Druckes im Eintrittsstutzen 210 mal die ihm zugewandte Stirnfläche des Ventiltellers 208 minus dem Druck im oberen Zylinderraum 206 mal die ihm zugewandte Stirnfläche des Servokolbens 203 wirkt so, dass das Ventil wieder schliesst und der Ventilteller 208 fest gegen den Ventilsitz 207 gepresst wird. Diese Bewegung wird ferner durch die Druckfeder 219, die Druckdifferenz zwischen beiden Stirnflächen des Ausgleichskolbens 213 und die Mediumströmung unterstützt. Nach dem Schliessen des erfindungsgemässen Ventils sinkt der Druck im Ventilraum 202, und es stellen sich die gleichen Druckverhältnisse wieder ein wie vor dem Oeffnen des Steuerventils 217.

Abweichend von dem beschriebenen Ausführungsbeispiel kann die Erfindung auch bei druckmediumbetätigten Regelventilen angewendet werden.

## Patentansprüche

1. Druckmediumbetätigtes Ventil mit einem einen Ventilraum (202) einschliessenden Gehäuse (201), in dem ein beweglicher, mit einem Ventilsitz (207) des Gehäuses zusammenwirkender Ventilteller (208) vorgesehen ist, mit einem vom Ventilraum (202) abgeschirmten und durch einen Servokolben (203) in zwei Zylinderräume (205, 206) unterteilten Zylinder (204), wobei der Ventilteller (208) über eine Spindel (209) mit dem Servokolben (203) verbunden ist und das Gehäuse (201) auf der dem Ventilteller (208) zugewandten Seite des Ventilsitzes (207) über einen Eintrittsstutzen (210) mit einer Druckmittelquelle und auf der dem Ventilteller (208) abgewandten Seite des Ventilsitzes (207) über einen Austrittsstutzen (211) mit einer Druckmittelsenke verbunden ist und zum wahlweisen Beaufschlagen mindestens eines der beiden Zylinderräume (205, 206) mit verschiedenen Drücken Drucksteuermittel (217) vorhanden sind, um den Ventilteller (208) auf den Ventilsitz (207) zu drücken oder von diesem wegzubewegen, wobei sich an den Ventilsitz (207) auf seiner dem Ventilteller (208) abgewendeten Seite ein Ausgleichszylinder (214) anschliesst, in dem ein mit dem Ventilteller koaxial verbundener Ausgleichskolben (213) geführt ist, wobei die einander zugewendeten Stirnflächen des Ventiltellers (208) und des Ausgleichskolbens (213) im wesentlichen gleich gross sind und der zwischen dem Ausgleichskolben (213) und dem Ventilteller (208) befindliche Raum des Ausgleichszylinders mit dem Austrittsstutzen verbunden ist, dadurch gekennzeichnet, dass stromoberhalb des Ventilsitzes (207) im Eintrittsstutzen (210) ein hohler Strömungsleitkörper (229) angeordnet ist und dass der Ventilteller (208) auf seiner Mediumzuströmseite einen Fortsatz (218) aufweist, der etwa gleichen Durchmesser wie der Ventilteller aufweist und der, in den Strömungsleitkörper ragend, in diesem geführt ist.

2. Ventil nach Anspruch 1, dadurch gekennzeichnet, dass das dem Ventilteller (208) abgewendete Ende des Ausgleichszylinders (214) mit einer Druckmittelsenke verbunden ist.

3. Ventil nach Anspruch 1 oder 2, dadurch gekennzeichnet, dass der Strömungsleitkörper (229) mit mehreren radialen Rippen (230) versehen ist, über die er im Eintrittsstutzen (210) befestigt ist.

4. Ventil nach Anspruch 3, dadurch gekennzeichnet, dass die Rippen (230) an ihren radial äusseren Enden in einem geschlossenen, den Strömungsleitkörper (229) umgebenden Ring (231) enden, der in einer seinen Abmessungen entsprechenden Aussparung (232) im Eintrittsstutzen (210) angeordnet ist.

5. Ventil nach einem der Ansprüche 1 bis 4, dadurch gekennzeichnet, dass das Druckmedium das Eigenmedium des Ventils ist.

## Claims

1. Pressure medium-operated valve with a housing (201), which encloses a valve chamber (202) and in which a mobile valve disc (208), which co-operates with a valve seat (207) of the housing, is provided, with a cylinder (204), which is screened off from the valve chamber (202) and divided by a servo piston (203) into two cylinder spaces (205, 206), the valve disc (208) being joined via a stem (209) to the servo piston (203), the housing (201) being joined on the side of the valve seat (207) which faces the valve disc (208) to a pressure medium source via an inlet connection (210) and on the side of the valve seat (207) which is distant from the valve disc (208) to a pressure medium sink via an outlet connection (211), pressure control means (217) being provided to enable at least one of the two cylinder spaces (205, 206) to be selectively acted upon by different pressures so as to press the valve disc (208) onto the valve seat (207) or move it away from the latter, a compensating cylinder (214) adjoining the valve seat (207) on its side which is distant from the valve disc (208), in which cylinder a compensating piston (213), which is joined in a coaxial manner to the valve disc, is guided, the facing end faces of the valve disc (208) and of the compensating piston (213) being essentially of the same size, and the space in the compensating cylinder between the compensating piston (213) and the valve disc (208) communicating with the outlet connection, characterised in that a hollow flow guide member (229) is arranged upstream of the valve seat (207) in the inlet connection (210), and that the valve disc (208) comprises on its medium inflow side an extension (218) which has approximately the same diameter as the valve disc and, projecting into the flow guide member, is guided in the latter.

2. Valve according to claim 1, characterised in that the end of the compensating cylinder (214) which is distant from the valve disc (208) communicates with a pressure medium sink.

3. Valve according to claim 1 or 2, characterised in that the flow guide member (229) is provided with a plurality of radial ribs (230), via which it is secured in the inlet connection (210).

4. Valve according to claim 3, characterised in that the ribs (230) end at their radially outer ends in a closed ring (231), which surrounds the flow guide member (229) and is arranged in a recess (232) of corresponding dimensions in the inlet connection (210).

5. Valve according to one of claims 1 to 4, characterised in that the pressure medium is the medium which is proper to the valve.

## Revendications

1. Vanne commandée par un fluide sous pression comportant un boîtier (201), renfermant une chambre de vanne (202), dans lequel il est prévu un obturateur de vanne (208) coopérant avec un siège de vanne (207) du boîtier, comportant un cylindre (204) protégé de la chambre de vanne (202) et subdivisé par un servo-piston (203) en deux chambres de cylindre (205, 206), dans laquelle l'obturateur de vanne (208) est relié par une tige (209) au servo-piston (203) et le boîtier (201) est relié, sur le côté du siège de vanne (207), tourné vers l'obturateur de vanne (208), par une tubulure d'entrée (210), avec une source de fluide sous pression et, sur le côté du siège de vanne (207), tourné à l'opposé de l'obturateur de vanne (208), par une tubulure de sortie (211), avec une source de dépression et, pour l'alimentation au choix d'au moins l'une des deux chambres de cylindre (205, 206) avec des pressions différentes, des moyens de commande de pression (217) sont prévus, pour presser l'obturateur (208) sur le siège (207) ou pour l'éloigner de celui-ci, un cylindre de compensation (214), dans lequel un piston de compensation (213) est guidé coaxialement à l'obturateur de vanne, se raccordant au siège (207) sur son côté tourné à l'opposé de l'obturateur (208), et les surfaces frontales tournées l'une vers l'autre de l'obturateur (208) et du piston de compensation (213) étant à peu près de mêmes dimensions et le volume du cylindre de compensation, compris entre le piston de compensation (213) et l'obturateur (208), étant relié avec la tubulure de sortie, caractérisée en ce qu'en amont du siège de vanne (207), il est prévu, dans la tubulure d'entrée (210), un corps de guidage d'écoulement (229) creux et en ce que l'obturateur (208) présente, sur son côté d'arrivée du fluide, un prolongement (218) qui présente à peu près le même diamètre que l'obturateur et qui, pénétrant dans le corps de guidage d'écoulement, est guidé dans celui-ci.

2. Vanne selon la revendication 1, caractérisée en ce que l'extrémité, opposée à l'obturateur (208), du cylindre de compensation (214) est reliée à une source de dépression.

3. Vanne selon la revendication 1 ou 2, caractérisée en ce que le corps de guidage d'écoulement (229) est pourvu de plusieurs nervures radiales (230) par lesquelles il est fixé dans la tubulure d'entrée (210).

4. Vanne selon la revendication 3, caractérisée en ce que les nervures (230) se terminent, à leurs extrémités radialement extérieures, dans un anneau (231) fermé entourant le corps de guidage d'écoulement (229), lequel anneau est monté dans une découpe (232), de dimensions correspondantes, pratiquée dans la tubulure d'entrée (210).

5. Vanne selon l'une des revendications 1 à 4, caractérisée en ce que le fluide sous pression est le fluide propre à la vanne.
